# DEMANDE DE BREVET EUROPEEN

(11) **EP 4 825 616 A1**
(43) Date de publication de la demande: **21.10.2026**
(21) Numéro de dépôt: 26172970.1
(22) Date de dépôt: 17.04.2026
(51) Int. Cl.: B60H 1/00, B60H 1/32

(54) **DISPOSITIF DE MANAGEMENT THERMIQUE D'UN VÉHICULE ÉLECTRIQUE**

(30) Priorité: 17.04.2025 FR 2504132
(71) Demandeur: AMPERE s.a.s., 92100 Boulougne-Billancourt (FR)
(72) Inventeur: YU, Robert, 78280 GUYANCOURT (FR)
(74) Mandataire: Renault Group

(57) **Abrégé**

L'invention concerne un dispositif de management thermique (1) d'un véhicule, notamment d'un véhicule électrique, comportant au moins un élément du groupe motopropulseur ainsi qu'un habitacle à réguler thermiquement, le dispositif de management thermique comprenant une boucle de fluide réfrigérant (L1) reliée par un premier échangeur de chaleur (14) à une boucle froide (L2), la boucle de fluide réfrigérant (L1) étant en outre reliée par un deuxième échangeur de chaleur (11) à une boucle chaude (L3), la boucle froide (L2) et/ou la boucle chaude (L3) pouvant être en relation fluidique avec une boucle de régulation thermique (L4) d'une batterie (47a) de traction selon un pilotage effectué par un moyen de contrôle (50), caractérisé en ce que la boucle chaude (L3) est apte à être reliée fluidiquement à la boucle froide (L2) par l'intermédiaire d'un monobloc multifonctions (60) de telle sorte que le dispositif de management thermique comprend un mode de fonctionnement selon lequel les calories de l'air traversant le radiateur (31) de la boucle chaude (L3) peuvent être transférées à l'échangeur (14) de la boucle de fluide réfrigérant (L1) afin de réchauffer l'air à destination de l'habitacle (47a).

## Description

### Domaine technique

L'invention est du domaine des systèmes de gestion thermique des organes d'un véhicule, et en particulier, des systèmes fonctionnant avec du propane.

L'invention aborde plus particulièrement le mode de chauffage de l'habitacle, voire de la batterie, d'un tel système en prélevant les calories présentes dans l'air ambiant.

### Techniques antérieures

Le réfrigérant actuel 1234yf présente un coefficient d'effet de serre GWP (acronyme pour « Global Warming Potential ») égal à 4, bien plus faible que le réfrigérant 134a précédemment utilisé qui présentait un coefficient GWP égale à 1400. L'utilisation du réfrigérant 1234yf représente donc un progrès important pour réduire le réchauffement climatique.

Toutefois, ce réfrigérant fait partie de la famille des composés PFAS (acronyme pour « Per-&-PolyFluoroAlkyl Substances ») comprenant notamment les composés fluorés HFC et HFO. Ces composés fluorés présentent des dangers pour la santé publique. L'interdiction de leur utilisation a été décidée par la communauté européenne et rentrera en vigueur dès la fin d'année 2025. Le propane et le dioxyde de carbone CO2 sont des substances naturelles candidates au remplacement du réfrigérant 1234yf.

L'utilisation du dioxyde de carbone CO2 nécessite une boucle à très haute pression (125 bars) et température (150°C), tandis que l'utilisation du propane nécessite une boucle fonctionnant à une pression (25 bars) et température (100°C) similaires à celles d'une boucle utilisant le réfrigérant actuel 1234yf. Par ailleurs, les performances du dioxyde de carbone CO2 et du propane sont proches.

Le froid et la chaleur produits par un tel système sont transportés par des boucles d'échange de chaleur qui les distribuent pour refroidir essentiellement l'habitacle et/ou la batterie de traction pendant le roulage et la recharge ou pour les chauffer en hiver.

Un système à propane requiert l'usage de sources de chauffage dédiées pour le chauffage de l'habitacle et/ou de la batterie, ce qui n'est pas économique en énergie notamment électrique, tout du moins ce qui a une incidence sur l'autonomie du véhicule du fait qu'une partie de l'énergie de la batterie de traction est convertie en énergie de chauffage.

Il existe ainsi un besoin d'amélioration pour un dispositif de management thermique pourvu d'un module à propane afin de réaliser un chauffage de l'habitacle en prélevant les calories de l'air ambiant.

### Résumé de l'invention

L'invention concerne un dispositif de management thermique d'un véhicule, notamment d'un véhicule électrique, comportant au moins un élément du groupe motopropulseur ainsi qu'un habitacle à réguler thermiquement, le dispositif de management thermique comprenant une boucle de fluide réfrigérant reliée par un premier échangeur de chaleur à une boucle froide, la boucle de fluide réfrigérant étant en outre reliée par un deuxième échangeur de chaleur à une boucle chaude, la boucle froide et/ou la boucle chaude pouvant être en relation fluidique avec une boucle de régulation thermique d'une batterie de traction selon un pilotage effectué par un moyen de contrôle. Le dispositif est remarquable en ce que la boucle chaude est apte à être reliée fluidiquement à la boucle froide par l'intermédiaire d'un monobloc multifonctions de telle sorte que le dispositif de management thermique comprend un mode de fonctionnement selon lequel les calories de l'air traversant le radiateur de la boucle chaude peuvent être transférées à l'échangeur de la boucle de fluide réfrigérant afin de réchauffer l'air à destination de l'habitacle.

Le dispositif objet de l'invention peut en outre comprendre les caractéristiques suivantes prises séparément ou en combinaison entre elles :
- il comprend un unique radiateur de refroidisseur, la boucle chaude comprenant l'unique radiateur de refroidissement qui est destiné au transfert thermique entre l'air ambiant et le fluide traversant le radiateur, notamment dans un mode de fonctionnement de type pompe à chaleur du dispositif de management thermique ;
- il comprend des branches d'interconnexion, notamment une première branche d'interconnexion et une seconde branche d'interconnexion, destinées à connecter en tout ou partie les boucles froide, chaude et de régulation thermique, ainsi que des vannes de régulation destinées à mettre en relation thermique la boucle de régulation thermique de la batterie avec la boucle chaude et/ou la boucle froide, de telle sorte que les calories de l'air ambiant prélevées par l'unique radiateur (31) peuvent être transférées vers la boucle de régulation thermique et/ou la boucle froide dans un mode de fonctionnement de type pompe à chaleur du dispositif ;
- chacune des première et seconde branches d'interconnexion est directement reliée à au moins une vanne de régulation du monobloc multifonctions, chacune des vannes de régulation étant apte à être reliée directement au radiateur ;
- l'une des extrémités de ladite autre branche d'interconnexion est reliée à un point de piquage interne audit monobloc multifonctions situé directement en amont d'une première pompe destinée à la circulation du fluide caloporteur au travers de la boucle froide, la pompe étant comprise dans le monobloc multifonctions ;
- le monobloc multifonctions comprend un vase d'expansion destiné au dégazage et à la compensation de la variation du volume de liquide caloporteur liée à la variation de sa température lorsque ce dernier circule au travers de la boucle chaude et/ou de la boucle froide ;
- la boucle de fluide réfrigérant comprend un compresseur, le condenseur, une vanne de détente, l'évaporateur pris dans cet ordre lors de la mise en fonctionnement du compresseur ;
- il comprend un moyen de contrôle de la circulation du fluide caloporteur circulant de la boucle froide vers la boucle de régulation thermique de la batterie, ledit moyen de contrôle de la circulation étant notamment une première vanne multivoies comprise dans le monobloc multifonctions ;
- la première vanne multivoies comprend au moins une ouverture de sortie destinée à l'écoulement du fluide caloporteur au travers d'une branche de connexion et de la première branche d'interconnexion, la branche de connexion étant reliée fluidiquement à un échangeur destiné à une relation thermique avec la boucle de régulation thermique de la batterie, la première vanne de régulation comprenant au moins une interface d'entrée reliée respectivement à la sortie d'un refroidisseur d'air destiné à l'habitacle et/ou une branche de contournement du refroidisseur, le refroidisseur et la branche de contournement étant compris dans la boucle froide ;
- la boucle froide comprend l'évaporateur de la boucle de fluide réfrigérant, le refroidisseur d'air et/ou la branche de contournement et la première pompe, pris dans cet ordre durant l'écoulement du fluide caloporteur dans le boucle froide par la première pompe.

L'invention concerne également un procédé de fonctionnement du dispositif de management thermique susmentionné, ledit moyen de contrôle (50) pilote la première vanne multivoies de manière à mettre en relation fluidique la branche de contournement du refroidisseur avec la branche de connexion, et la vanne de régulation l'état fermé de telle sorte que le fluide caloporteur n'est pas apte à traverser l'échangeur, et la seconde vanne multivoies de manière à mettre en relation fluidique la première branche d'interconnexion avec le radiateur, et la troisième vanne multivoies de manière à mettre en relation fluidique le radiateur avec la seconde branche d'interconnexion reliée au point de piquage situé en amont d'une première pompe, et la première pompe de manière à faire circuler le fluide caloporteur au travers de la boucle froide.

Le procédé de l'invention peut en outre comprendre l'étape suivante :
- ledit moyen de contrôle pilote la seconde vanne de manière à mettre en relation fluidique le condenseur et la chaîne de traction électrique avec l'aérotherme, et la troisième vanne de manière à mettre en relation fluidique l'aérotherme avec la seconde pompe, et la seconde pompe de manière à faire circuler le fluide caloporteur au travers de la boucle chaude.

Selon le procédé de l'invention, ledit moyen de contrôle peut piloter la troisième vanne multivoies de manière à mettre en relation fluidique la boucle chaude avec la seconde branche d'interconnexion comprenant l'unique vase d'expansion.

L'invention a aussi trait à un véhicule, notamment de type à propulsion électrique, selon lequel le dispositif de management thermique comprenant en tout ou partie les caractéristiques susmentionnées, ou comprenant les moyens matériel et logiciel permettant la mise en œuvre du procédé de fonctionnement du dispositif de management thermique susmentionné.

### Dessins

Les dessins annexés représentent, à titre d'exemple, le dispositif de management thermique d'un véhicule, objet de l'invention. Plus précisément,
- la [Fig.1] représente schématiquement un dispositif de management thermique selon l'invention ;
- la [Fig.2] représente schématiquement le dispositif de management thermique de la figure 1 dans une configuration en mode pompe à chaleur, afin de chauffer l'habitacle par les calories qui peuvent exclusivement être captées dans l'air ambiant traversant un unique radiateur du dispositif.

### Description de l'invention

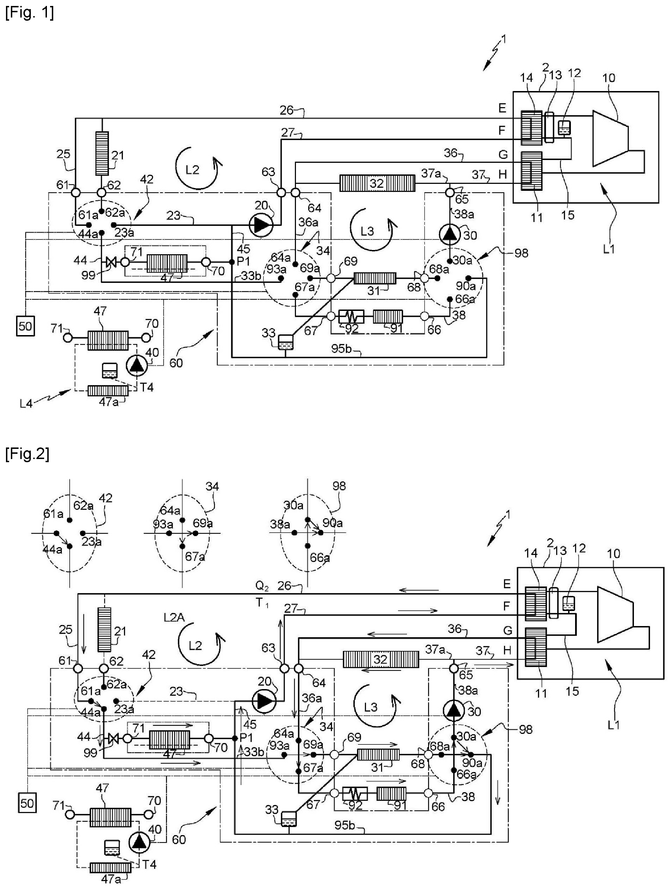

La [Fig.1] représente un dispositif de management thermique 1 comprenant des composants à réguler thermiquement, les circuits hydrauliques les reliant ainsi que les actionneurs pilotés par un moyen de contrôle 50. Le dispositif de management thermique 1 est destiné un véhicule à propulsion électrique comportant une batterie de traction 47a, une chaîne de traction électrique 32 ainsi qu'un dispositif de ventilation, de chauffage et de climatisation d'un habitacle comportant un refroidisseur 21, un aérotherme 91 et une résistance électrique 92. Le dispositif de management thermique 1 comprend un module de production 2 de frigories et de calories, qui est compact et qui utilise en tant que fluide réfrigérant du propane, qui sera qualifié par la suite de boite à propane, ou par le terme anglais « propane box ». La boite à propane 2 comprend une boucle de fluide réfrigérant L1 reliée par un premier échangeur de chaleur 14 à une boucle froide L2. La boucle de fluide réfrigérant L1 est en outre reliée par un deuxième échangeur de chaleur 11 à une boucle chaude L3. La boucle froide L2 et/ou la boucle chaude L3 peut être en relation fluidique avec un échangeur thermique 47 compris dans une boucle de régulation thermique L4 traversant la batterie 47a. L'échangeur thermique 47 est de type eau/eau, les fluides caloporteurs circulant au travers de la boucle froide L2 et de la boucle de régulation thermique L4 de la batterie pouvant être de natures différentes. Préférentiellement, la boucle froide L2 et/ou la boucle chaude L3 peut être en relation thermique avec une boucle de régulation thermique L4 via l'échangeur 47. Le fluide caloporteur circulant dans les boucles L2 et L3 peut être dans ce cas à base d'eau glycolée. Le fluide caloporteur circulant dans la boucle L4 est de préférence un fluide diélectrique. Selon une variante de réalisation non représentée, la boucle froide L2 et/ou la boucle chaude L3 peut être en relation fluidique avec une boucle de régulation thermique L4 qui comprend uniquement une plaque froide sur laquelle est positionnée la batterie 47a. Dans cette variante de réalisation non représentée, le fluide caloporteur circulant dans les boucles L2, L3 et L4 pouvant être de même nature, notamment de type d'un fluide caloporteur traditionnel, telle que de l'eau glycolée. La boucle de régulation thermique L4 se résume à la seule plaque froide de telle sorte que la plaque froide est l'échangeur 47 qui est en relation thermique directe avec la batterie 47a.

Selon le mode de réalisation de la [Fig.1], la mise en relation fluidique des boucles L2, L3 et L4 est opérée par un monobloc multifonctions 60, qui est préférentiellement de type modulaire en ce sens qu'il peut s'agir d'une unité intégrant au moins une vanne de régulation et/ou au moins une conduite interne et/ou au moins une pompe et/ou au moins un vase d'expansion. Le monobloc multifonctions 60 comprend en outre des conduites internes permettant de relier fluidiquement les boucles L2, L3 ou L4, en tout ou partie entre elles.

Afin de réguler thermiquement la batterie 47a, le monobloc multifonctions 60 est destiné à relier les boucles L3 et L4 ensemble afin de permettre un transfert de calories de la boucle chaude L3 à la boucle thermique batterie L4. Le monobloc multifonctions 60 est également apte à créer un refroidissement du fluide caloporteur destiné à être en échange thermique avec la batterie 47a via la boucle de régulation thermique L4, après son échange thermique avec l'air ambiant traversant le radiateur 31 de la boucle L3, lorsque la température de l'air ambiant est inférieure à un seuil de température, par exemple le seuil est de 20°C. Dans cette configuration du monobloc multifonctions 60, la boucle de fluide réfrigérant L1 est désactivée de telle sorte la seule source de frigories provient de l'air ambiant.

Durant la charge rapide de la batterie 47a, le besoin de dégagement d'un excédent de chaleur est nécessaire de sorte qu'il est fait recours au radiateur 31 pour évacuer cette chaleur par un refroidissement du fluide caloporteur en échange avec l'air ambiant, ce qui a pour incidence de maintenir l'eau à une température comprise entre 5°C et 10°C au-dessous de la température nominale de fonctionnement de la batterie, qui peut être comprise entre 50°C et 60°C, préférentiellement 55°C.

Selon une configuration de fonctionnement des première, seconde et troisième vannes multivoies 42, 34 et 98, il est possible de transférer les calories issues du fonctionnement de la batterie 47a à des fins de chauffage de l'habitacle et/ou d'au moins un composant de la chaîne de traction électrique 32. Il est en outre possible de transférer les calories de la chaine de traction électrique 32 ou/et de la résistance électrique 92 afin de préconditionner la batterie 47a par une augmentation de sa température, ce qui tend à améliorer son rendement pour une charge rapide.

Le chauffage de la batterie 47a peut également être obtenu par la sollicitation cumulative de l'ensemble des éléments du dispositif de management thermique de l'invention qui sont aptes à transférer des calories au fluide circulant à la fois dans les boucles chaude L3 et de régulation thermique L4. La propane box peut être mise en fonctionnement afin de transmettre des frigories au fluide caloporteur circulant au travers du condenseur 11. Cela permet avantageusement au fluide caloporteur une récupération des calories d'au moins un composant de la chaîne de traction électrique 32, du condenseur 11 de la boucle de fluide réfrigérant L1, mais aussi de la résistance chauffante 92 en cas de besoin de chauffage augmenté. Pour ce faire, le moyen de contrôle 50 active la mise en fonctionnement des première et seconde pompes 20 et 30 du monobloc multifonctions 60, ainsi qu'un pilotage des première, seconde et troisième vannes multivoies 42, 34, 98.

La première pompe 20 est pilotée par un calculateur 50 pour assurer un débit Q₂ au travers de la branche d'alimentation 26 de la boucle froide L2 est suffisant selon la consigne de température de l'habitacle, mais aussi selon d'autres paramètres mesurés ou estimés tels que la température ambiante, le degré d'ensoleillement et/ou le volume de l'habitacle.

En sortie du refroidisseur 21, la boucle froide L2 comprend la vanne multivoies 42 qui est pilotée par le calculateur 50 afin d'alimenter au besoin la branche comportant l'échangeur 47 et/ou la branche de contournement 23 disposée en parallèle, mais aussi de permettre une circulation du fluide caloporteur au travers de la branche de contournement 25 du refroidisseur 21.

Selon un état de fonctionnement de la première vanne multivoies 42, le fluide caloporteur circule au travers du refroidisseur 21 afin de refroidir et/ou déshumidifier l'air à destination de l'habitacle, de telle sorte que la vanne est en configuration de refroidissement de l'habitacle.

Lorsque le fluide caloporteur est dirigé vers l'échangeur 47 en relation thermique avec la boucle de régulation thermique L4 comprenant la batterie 47a, une vanne de régulation 99 permet de réguler le débit de fluide caloporteur traversant l'échangeur 47, cela permet de réguler la quantité de frigories à apporter à la batterie 47a en réponse au besoin de refroidissement établi notamment par la température T4.

La boucle de régulation thermique L4 comprend un échangeur 47 de chaleur entre fluide caloporteur et le fluide diélectrique de refroidissement de batterie, ce dernier pouvant être en contact direct avec les cellules pour obtenir une meilleur performance de refroidissement. La boucle de régulation L4 comprend une pompe 40, un vase d'expansion et un moyen de mesure de la température T4

Le calculateur 50 pilote les différentes pompes et vannes du dispositif de management thermique dans ce but de répondre au besoin de régulation en tenant en considération la température T1 du fluide caloporteur en sortie de l'évaporateur 14, de la température mesurée T4 du fluide circulant au sein de la batterie 47a et de la température de l'air ambiant. La pompe 40 de la boucle de régulation thermique L4 est pilotée à rotation, également dans un but d'adapter la teneur de l'échange thermique entre le fluide diélectrique et les cellules de la batterie à refroidir.

La boucle haute température L3, qui peut aussi être qualifiée par la suite de boucle chaude L3, assure le refroidissement du condenseur 11 de la boucle de fluide réfrigérant L1, ainsi que l'échange thermique avec des composants de chaine de traction électrique 32 avec lesquels le fluide caloporteur est en échange thermique. Le transfert de chaleur entre le fluide réfrigérant et le fluide caloporteur de la boucle haute température L3 permet une augmentation de la température du fluide caloporteur afin de rende possible un chauffage d'au moins un composant présent sur la boucle haute température, voire de l'habitacle via l'aérotherme 91 compris dans la boucle chaude L3.

La boucle chaude L3 comprend l'aérotherme 91 qui est destiné à être traversé par un air notamment pulsé à des fins de chauffage de l'habitacle. La boucle chaude L3 comprend la seconde pompe électrique 30 et des conduits reliant les composants susmentionnés en série. La boucle chaude peut également comprendre une résistance électrique 92 située en amont de l'aérotherme 91, préférentiellement directement en amont. Ainsi disposée dans la branche de chauffage, la résistance électrique 92 vise à augmenter la capacité de chauffage de l'air à destination de l'habitacle. La boucle chaude L3 comprend également une branche de refroidissement dans laquelle est disposé un radiateur 31 destiné au refroidissement du fluide caloporteur de la boucle chaude L3 par un échange thermique avec un air ambiant traversant le faisceau du radiateur 31. Ladite branche de refroidissement est parallèle à la branche de chauffage contenant l'aérotherme 91. Comme cela sera détaillé par la suite, le radiateur 31 sera aussi utilisé à des fins de fonctionnement en mode pompe à chaleur du dispositif de management thermique 1.

La boucle chaude L3 comprend la seconde vanne multivoies 34 qui peut être assimilée à un point d'entrée de la boucle chaude L3, ainsi qu'une troisième vanne multivoies 98 qui peut être assimilée à un point de sortie de la boucle chaude L3. Selon l'état de fonctionnement des seconde et troisième vannes multivoies 34, 98, le débit circulant dans la branche de refroidissement comportant le radiateur 31, peut être contrôlé selon le besoin de chauffage de l'habitacle et selon la régulation thermique d'au moins un composant de la chaîne de traction 32.

Le monobloc multifonctions 60 du dispositif 1 va à présent être présenté en détail. Le monobloc multifonctions 60 intègre des éléments actifs et passifs d'un circuit de traitement thermique. Les éléments actifs du monobloc multifonctions 60 comprennent une première pompe 20 et une seconde pompe 30 à eau, et trois vannes multivoies 42, 34, 98. Les éléments actifs sont pilotés par ledit moyen de contrôle 50 selon les besoins de refroidissement et de chauffage des divers composants du véhicule, parmi lesquels se trouvent la chaine de traction électrique 32, Iz batterie 47a de traction. La chaine de traction électrique 32 comprend notamment au moins un moteur électrique de traction du véhicule, l'onduleur destiné à la recharge en électricité de la batterie ainsi qu'à la commande en puissance électrique du moteur électrique. Les éléments passifs comprennent au moins un bocal de dégazage permettant une expansion et/ou un dégazage du circuit de traitement thermique dans lequel circule par exemple de l'eau glycolée, et des conduits internes reliant les éléments actifs soit entre eux, soit à d'autres composants externes au monobloc multifonctions 60. Ces autres composants appartiennent au circuit de traitement thermique et sont reliés fluidiquement au monobloc multifonctions 60 par l'intermédiaires de brides de connexion. Les conduits internes sont créés par des passages de courte longueur réalisés par la fonderie et/ou perçage dans le monobloc multifonctions 60. Le monobloc multifonctions 60 est avantageusement compact, ce qui le rend plus facilement intégrable dans un compartiment avant du véhicule. Le monobloc multifonctions 60 peut être réalisé en matière plastique de sorte qu'il est économe à fabriquer tout en lui conférant un poids contenu favorisant ainsi la réduction de l'énergie consommée par le véhicule lors de son déplacement. Comparativement aux dispositifs de management thermique connus, le monobloc multifonctions 60 vise à remplacer les principales portions de circuit qui sont équipées des pompes, bocaux, et vannes répartis dans un véhicule et connectés par les longues durites. Le monobloc multifonctions 60 est ensuite connecté de façon simple aux différents échangeurs thermiques ainsi qu'aux autres composants à refroidir. Le monobloc multifonctions est préférentiellement relié aux composants de la chaine de traction électrique 32, à la batterie 47a notamment de manière indirecte, aux échangeurs thermiques pour refroidir ou chauffer l'habitacle et/ou la batterie.

Le monobloc multifonctions 60 comprend plusieurs brides 61 à 71. Les brides 61 à 63 sont reliées à la boucle froide L2. Les brides 64 à 69 sont reliées à la boucle chaude L3. Les brides 70 et 71 sont reliées à la boucle de régulation thermique L4.

Le monobloc multifonction 60 dispose de première et seconde pompes électriques 20, 30, un unique vase d'expansion 33, et de trois vannes multivoies 42, 34, 98, qui par la suite seront respectivement nommées première vanne multivoies, seconde vanne multivoies et troisième vanne multivoies. La première pompe 20 est apte à engendrer un écoulement du fluide caloporteur au sein d'une boucle froide L2, elle peut être qualifiée de pompe de boucle froide. La seconde pompe 30 est apte à engendrer un écoulement du fluide caloporteur au sein d'une boucle chaude L3, elle peut être qualifiée de pompe de boucle chaude. La troisième pompe 40 est apte à engendrer un écoulement du fluide caloporteur au sein de la boucle de régulation thermique de la batterie 47a, elle peut être qualifiée de pompe de boucle batterie.

Le vase d'expansion 33 est traversé par le fluide caloporteur de telle sorte qu'il est apte à piéger le fluide réfrigérant de type propane pouvant être contenu dans le fluide caloporteur qui traverse les échangeurs de la boucle de fluide réfrigérant L1. Avantageusement, comme cela sera détaillé par la suite, toute fuite de propane dans le circuit de fluide caloporteur peut être captée au niveau de l'unique vase d'expansion qui est de type circulant, en ce sens qu'il comprend au moins deux orifices d'écoulement du fluide caloporteur de telle sorte que ce dernier traverse de manière permanente le vase d'expansion 33. La mise en relation fluidique de la boucle chaude L3 avec le vase d'expansion 33 s'opère par une conduite 96 dont l'une des extrémités est connectée à la bride 69 ou à une voie de sortie 69a de la seconde vanne multivoies 34, ou au niveau de la partie sommitale du radiateur 31. L'autres des extrémités est connectée soit directement au vase d'expansion 33, soit indirectement au vase d'expansion par l'intermédiaire de la branche d'interconnexion 95b.

La vanne multivoies 42 peut être qualifiée de vanne de gestion des frigories, elle comprend quatre voies 23a, 44a, 61a et 62a. Elle est apte à régler débit de la voie 62a, pouvant être qualifiée de première voie d'entrée, vers la voie 23a, pouvant être qualifiée de première voie de sortie, en X% et par conséquent de la première voie d'entrée 62a vers la voie 44a, pouvant être qualifiée de deuxième voie de sortie, en 1-X%, sachant que X varie de 0 à 100%. Elle est apte à régler débit de la voie 61a, pouvant être qualifiée de seconde voie d'entrée, vers la voie 23a ou vers la voie 44a. Le débit de fluide au travers de la première voie 62a est exprimé en Y%, et le débit de fluide au travers de la seconde voie 61a est exprimé en 1-Y%, sachant que Y varie de 0 à 100%.

La troisième vanne multivoies 98 peut être qualifiée de vanne de gestion des calories, elle comprend quatre voies 68a, 66a, 30a et 90a, respectivement la première voie d'entrée 68a, le seconde voie d'entrée 66a, le première voie de sortie 30a et la seconde voie de sortie 90a. Elle est apte à régler débit de la voie 68a, pouvant être qualifiée de première voie d'entrée, vers la voie 30a, pouvant être qualifiée de première voie de sortie, en X% et par conséquent de la première voie d'entrée 68a vers la voie 90a, pouvant être qualifiée de deuxième voie de sortie, en 1-X%, sachant que X varie de 0 à 100%. Elle est apte à régler débit de la voie 66a, pouvant être qualifiée de seconde voie d'entrée, vers la voie 30a ou vers la voie 90a. Le débit de fluide au travers de la première voie d'entrée 68a est exprimé en Y%, et le débit de fluide au travers de la seconde voie d'entrée 66a est exprimé en 1-Y%, sachant que Y varie de 0 à 100%.

La seconde vanne multivoies 34 peut être qualifiée de vanne d'interconnexion des boucles froide L2 et chaude L3, elle comprend quatre voies 64a, 93a, 67a et 69a. Elle est apte à régler débit de la voie 64a, pouvant être qualifiée de première voie d'entrée, vers la voie 67a, pouvant être qualifiée de première voie de sortie, en X% et par conséquent de la première voie d'entrée 64a vers la voie 69a, pouvant être qualifiée de deuxième voie de sortie, en 1-X%, sachant que X varie de 0 à 100%. Elle est apte à régler débit de la voie 93a, pouvant être qualifiée de seconde voie d'entrée, vers la voie 67a ou vers la voie 69a. Le débit de fluide au travers de la première voie d'entrée 64a est exprimé en Y%, et le débit de fluide au travers de la seconde voie d'entrée 93a est exprimé en 1-Y%, sachant que Y varie de 0 à 100%. La seconde vanne 34 permet une gestion thermique de la boucle chaude L3 en permettant une circulation du fluide caloporteur au travers de la branche de refroidissement comprenant le radiateur 31 et/ou au travers de la branche de chauffage, notamment de l'air à destination de l'habitacle, par l'intermédiaire de l'aérotherme 91.

La boîte à propane 2 est un élément distinct en ce sens qu'il est dissociable des autres éléments du dispositif de l'invention. La boîte à propane 2 comprend un compresseur 10, le condenseur 11, un vase d'expansion 12, un détendeur 13, un évaporateur 14, préférentiellement pris dans cet ordre lorsque le fluide réfrigérant est en circulation au sein de la boucle de réfrigérant L1 via le compresseur 10. Le détendeur 13 régule de manière pré-calibrée la détente du fluide réfrigérant circulant dans le module de production 2 en tenant en considération la température du fluide entrant et sortant de l'évaporateur 14. La boucle de fluide réfrigérant L1, qui peut aussi être qualifié de boucle à fluide à changement de phase entre liquide et gazeux, comprend préférentiellement du propane. La boucle dans laquelle circule le propane est disposée à l'intérieur d'une enceinte hermétique, en ce sens qu'elle est étanche à l'air ambiant de telle sorte que toute fuite de propane ne puisse pas être dispersée dans l'air ambiant. Le module de production 2 de frigories et de calories est de type compact en ce sens que l'enceinte hermétique a un volume compris entre 5 et 20 litres, notamment entre 10 et 15 litres, préférentiellement de 10 litres.

L'enceinte requiert une propriété d'étanchéité à l'air élevée du fait que le fluide réfrigérant est du type propane.

Les brides d'interconnexion 61 et 62 du monobloc multifonctions 60 sont connectés respectivement à la branche 25 de contournement de l'échangeur 21 et à la sortie de l'échangeur 21. La bride d'interconnexion 63 est connecté à l'entrée F de l'évaporateur 14, de sorte que la monobloc multifonctions 60 est relié à la boucle froide L2. La bride d'interconnexion 64 est connectée à la jonction entre la sortie de la chaine de traction électrique 32 et la sortie G du condenseur 11, de sorte que la monobloc multifonctions 60 est relié à la boucle chaude L3. La bride d'interconnexion 65 est connectée à la jonction entre l'entrée de la chaine de traction électrique 32 et l'entrée H du condenseur 11. Les brides d'interconnexion 68 et 69 sont connectées respectivement à la sortie et à l'entrée du radiateur 31. Les brides d'interconnexion 66 et 67 sont connectées respectivement à la sortie et à l'entrée du groupe de chauffage de l'habitacle comprenant l'aérotherme 91 et une résistance

électrique chauffante 92, pouvant notamment être alimentée par la batterie de traction à haute tension comprise par exemple entre 400 et 800 V. Quant aux brides d'interconnexion 70 et 71, elles sont respectivement connectées à la sortie et à l'entrée d'un échangeur thermique 47 au travers duquel un fluide caloporteur est apte à circuler au travers de la boucle de régulation thermique L4 de la batterie 47a.

La boucle froide L2 comportant l'évaporateur 14 est reliée fluidiquement aux brides d'interconnexion 61 et 63 de manière directe, et à la bride d'interconnexion 62 de manière indirecte du fait du refroidisseur 21.

Avantageusement, le dispositif de management thermique est également apte à réguler la température de la batterie 47a et/ou de l'habitacle par le transfert de frigories.

Le mode de refroidissement simultané de l'habitacle et de batterie, décrit ci-dessous utilise cet autre mode de réglage. Lorsque nous n'avons besoin que de refroidir la batterie par le froid produit par le réfrigérant, le fluide entre par la voie 61a de la première vanne multivoies 42. Le débit total sera réparti toujours entre la voie 44a et 23a. Et la même consigne de réglage sera appliqué que le cas précédent. Pour la seconde vanne 4 multivoies 34, le réglage de la voie 64a vers la voie 67a (en X%) ou vers la voie 69a (en 1-X%) peut être fait avec un principe de réglage similaire en utilisant la température de l'habitacle Tc comme consigne : si la température de cabine Tc est inférieure à sa valeur de consigne Tcc, la seconde vanne multivoies 34 laisse plus de débit vers la voie 67a. D'autres modes de passage sont prévus pour cette vanne, qui seront décrits ultérieurement. La troisième vanne 4 multivoies 98 est de type tout ou rien : par exemple la voie 30a peut être connectée à la voie 66a ou aux voies 66a et 90a en simultané pour notamment un besoin de liaison fluidique de la boucle chaude L3 à l'unique vase d'expansion 33, et le reste de voies non connectées, ou en même temps la voie 68a peut être connectée à la voie 90a.

Nous décrivons ci-dessous l'architecture interne du monobloc multifonctions 60 telle qu'elle est réalisée par le biais de conduites internes. La bride d'interconnexion 63 est relié à la sortie de la première pompe 20 de la boucle froide L2 par une conduite interne, la pompe étant reliée à la voie 23a de sortie la vanne multivoies 42 par une autre conduite interne 23. La bride de connexion 64 est reliée à la seconde vanne multivoies 34 d'interconnexion par l'intermédiaire d'une conduite interne 36a. La bride de connexion 65 est connectée à la sortie de la seconde pompe 30 de la boucle chaude L3 par une conduite interne de sortie 38a. La bride de connexion 70 est reliée fluidiquement à l'entrée de la première pompe 20 de la boucle froide L2. La bride de connexion 70 est reliée fluidiquement à la voie 90a de sortie de la troisième vanne multivoies 98 de la boucle chaude L3 par l'intermédiaire d'une seconde branche d'interconnexion 95b formant un conduit interne au sein de monobloc multifonctions 60 comportant un vase d'expansion 33, notamment un unique vase d'expansion. La bride de connexion 71 est à la fois reliée à la seconde voie 44a de sortie de la vanne multivoies 42 et à la seconde voie d'entrée 93a de la seconde vanne multivoies 34 d'interconnexion. Une vanne de régulation 99 est disposée directement en amont de la bride de connexion 71 afin de piloter au plus juste le débit de fluide caloporteur destiné à circuler au travers de l'échangeur 47.

Le dispositif de management thermique est remarquable en ce qu'il permet un fonctionnement de type pompe à chaleur afin de chauffer l'habitacle en prélevant les calories de l'air traversant l'aérotherme 91, de telle sorte que ces dernières seront par la suite transmises au condenseur 11 de la boucle de fluide réfrigérant L1. Cela aura pour incidence une montée en température de la boucle de fluide réfrigérant L1, donc une élévation de température du fluide caloporteur susceptible de circuler au sein de la boucle chaude L3, potentiellement au travers de l'aérotherme 91, comme cela est représenté à la [Fig.2]. Les flèches indiquent le sens de circulation du fluide dans le dispositif de management de l'invention. Les lignes pointillées représentent une absence de circulation du fluide au travers d'une branche de la boucle froide L2 afin de ne pas réaliser de transfert thermique. Ici, le refroidisseur 21 est contourné, de tel sorte que le fluide caloporteur circule uniquement au travers de la branche de contournement 25. L'air circulant au travers du refroidisseur 21 n'est par conséquent pas refroidie.

Dans le mode de fonctionnement de type pompe à chaleur, la vanne froide 42 est dans une configuration de mise en relation fluidique des secondes entrée 61a et sortie 44a de telle sorte que le fluide caloporteur ayant contourné le refroidisseur 21 est dirigé vers la première branche d'interconnexion 93b avec la vanne de régulation 99 en état de fermeture de manière à contourner l'échangeur 47. Le fluide caloporteur circulant au travers de la première branche d'interconnexion est ensuite dirigé au travers du radiateur 31 de la boucle chaude L3.

La seconde vanne multivoies 34 est dans un mode de fonctionnement selon lequel, les premières voies d'entrée 64a et de sortie 67a sont en communication fluidique, et les secondes voies d'entre 93a et de sortie 69a sont également en communication fluidique. La troisième vanne multivoies 34 est dans un mode de fonctionnement selon lequel, la première voie d'entrée 68a est en communication fluidique avec la seconde voie de sortie 90a, et la seconde voie d'entrée 66a est en communication fluidique avec la première voie de sortie 30a. La combinaison de la seconde vanne multivoies 34 avec le troisième vanne multivoies 98 permet ainsi de réaliser en simultanée deux circulations distinctes du fluide caloporteur, l'une au travers de la boucle chaude L3 sans passer par le radiateur 31, l'autre au travers de la boucle froide L2 reliée le radiateur 31 afin de réaliser un mode de fonctionnement de type pompe à chaleur pour chauffer l'habitacle du véhicule. Le fluide caloporteur ayant capté les calories de l'air ambiant au travers du radiateur 31, circule ensuite entre la première voie d'entrée 68a et la seconde voie de sortie 90a afin de rejoindre la première pompe 20 de la boucle froide L2 via la seconde branche d'interconnexion 95b dont l'une des extrémités est reliée à la seconde voie de sortie 90a et à la bride de connexion 70 fluidiquement reliée à l'entrée de la première pompe 20 via le conduit interne 45. La première pompe 20 engendre un flux du fluide caloporteur au travers de la conduite externe 27 qui est reliée à l'entrée F de l'évaporateur 14, ce qui tend à réchauffer le fluide réfrigérant au sein de la boucle L1. Les calories ayant ainsi été transférées à la boucle L1 de fluide réfrigérant, cette dernière à un fonctionnement à température plus élevée de telle sorte que le fluide caloporteur sortant en G du condenseur 11 rejoint l'aérotherme 91 selon une température plus élevée comparativement au mode de fonctionnement traditionnel établi selon une circulation du fluide caloporteur dans la boucle froide L2 sans radiateur 31.

Avantageusement, outre cette circulation du fluide caloporteur au sein du radiateur 31 habituellement destiné au refroidissement des composants de la boucle chaude L3, et sans échange thermique au travers du refroidisseur de la boucle froide L2 du fait de l'état fermé de la vanne de régulation 99, le dispositif permet d'opérer un transfert optimal de calories vers l'habitacle 91 , sans nécessairement requérir la mise en fonctionnement de la résistance électrique 92 ce qui tend à réduire la consommation d'énergie électrique pour chauffer l'habitacle. Selon un besoin accru et/ou rapide de chauffage de l'air à destination de l'habitacle, la résistance électrique 92 pourrait optionnellement être mise en état de fonctionnement.

Le fonctionnement du dispositif en mode pompe à chaleur permet un management thermique de l'habitacle requérant peu d'énergie électrique du fait que les calories proviennent de l'air ambiant lorsque le dispositif est piloté en mode pompe à chaleur.

Sur la [Fig.2], le fluide caloporteur circule ainsi au travers du condenseur 11 de la boucle de fluide réfrigérant L1, et de la chaine de traction électrique 32, à des fins de refroidissement, en captant les calories qui vont être par la suite échangées avec l'air à destination de l'habitacle lorsque le fluide caloporteur traverse l'aérotherme 91. La seconde vanne multivoies 34 créée dans ce cas une mise en relation fluidique directe de la bride d'interconnexion 64 avec la bride d'interconnexion 67 de telle sorte que le fluide caloporteur chaud circulant au travers du conduit interne 36a est apte à circuler au travers de l'aérotherme 91 avant de rejoindre l'entrée de la seconde pompe 30 de la boucle chaude L3.

Dans le cas d'un besoin de chauffage augmentée, où seuls les échanges thermiques avec la chaine de traction électrique 32 et le condenseur 11 ne sauraient être suffisant, la résistance électrique disposée en amont de l'aérotherme 91 peut être commandée par le moyen de contrôle 50 afin de réchauffer le fluide caloporteur circulant ensuite au travers de l'aérotherme 91 pour réchauffer l'air à destination de l'habitacle.

Le dispositif de management thermique 1 est remarquable en ce qu'il rend apte la mise en œuvre du procédé de fonctionnement qui va être décrit. Par l'usage dudit moyen de contrôle 50, le dispositif peut être piloté de la manière suivante.

La première vanne multivoies 42 peut mettre en relation fluidique la branche de contournement 25 du refroidisseur 21 avec la branche de connexion 44. Cela permet tout échange de chaleur entre le fluide caloporteur provenant de l'évaporateur avec l'air à destination de l'habitacle.

La vanne de régulation 99 peut ensuite être en l'état fermé de telle sorte que le fluide caloporteur contourne l'échangeur 47 afin d'être orienté vers la première branche d'interconnexion 93b. Cela permet de positionner la seconde vanne multivoies 34 directement au prolongement de l'évaporateur 14 de la boucle de réfrigérant L1.

La seconde vanne multivoies 34 est configurée de manière à mettre en relation fluidique la première branche d'interconnexion 93b avec le radiateur 31. Cela permet de positionner le radiateur 31 directement au prolongement de l'évaporateur 14 de la boucle de réfrigérant L1 de telle sorte que le fluide caloporteur en entrée du radiateur 31 a une température inférieure à 5°C.

La troisième vanne multivoies 98 est configurée de manière à mettre en relation fluidique le radiateur 31 avec la seconde branche d'interconnexion 95b reliée au point de piquage P1 situé en amont d'une première pompe 20. En traversant le radiateur 31, le fluide caloporteur capte les calories de l'air qui est supérieur à 5°C.

La circulation du fluide caloporteur au travers de la boucle froide L1 est opérée par la première pompe 20. Le fluide caloporteur ayant capté les calories de l'air au niveau du radiateur 31 circule alors au travers de l'évaporateur 14, qui va faire monter en température le fluide réfrigérant de la boucle de réfrigérant L1.

Le moyen de pilotage 50 étant en relation de commande du compresseur 10, l'élévation de température du fluide réfrigérant est dès lors transmise au condenseur 11.

Cet apport de calories vers être utilisé pour chauffer l'air de l'habitacle. Pour se faire, le moyen de contrôle 50 pilote la seconde vanne 34 de manière à mettre en relation fluidique le condenseur 11 et la chaîne de traction électrique 32 avec l'aérotherme 91. La troisième vanne 98 est configurée de manière à mettre en relation fluidique l'aérotherme 91 avec la seconde pompe 30 de sorte que le fluide caloporteur est apte à circuler en boucle fermée au travers de la boucle chaude L3.

Compte tenu de la variation de température du fluide caloporteur circulant ainsi dans la boucle chaude L3, le moyen de contrôle 50 pilote la troisième vanne multivoies 98 selon une configuration permettant de mettre en relation fluidique la boucle chaude L3 avec la seconde branche d'interconnexion 95b comprenant l'unique vase d'expansion 33. La variation de température du fluide caloporteur engendre une variation de pression qui peut être absorbée par l'unique vase d'expansion 33 du dispositif précédemment décrit.

La mise en œuvre du procédé susmentionné permet avantageusement un fonctionnement en mode pompe à chaleur afin de chauffer l'habitacle du véhicule.

Le dispositif est remarquable en ce que seul le monobloc multifonctions 60 est configuré réaliser le mode de fonctionnement de type pompe à chaleur. Le dispositif de management thermique 1 ne requiert pas l'ajout d'un autre échangeur thermique pour capter les calories de l'air puisque seul le radiateur 31 est mis à contribution pour cette fonction.

## Revendications

1. Dispositif de management thermique (1) d'un véhicule, notamment d'un véhicule électrique, comportant au moins un élément du groupe motopropulseur ainsi qu'un habitacle à réguler thermiquement, le dispositif de management thermique comprenant une boucle de fluide réfrigérant (L1) reliée par un premier échangeur de chaleur (14) à une boucle froide (L2), la boucle de fluide réfrigérant (L1) étant en outre reliée par un deuxième échangeur de chaleur (11) à une boucle chaude (L3), la boucle froide (L2) et/ou la boucle chaude (L3) pouvant être en relation fluidique avec une boucle de régulation thermique (L4) d'une batterie (47a) de traction selon un pilotage effectué par un moyen de contrôle (50), **caractérisé en ce que** la boucle chaude (L3) est apte à être reliée fluidiquement à la boucle froide (L2) par l'intermédiaire d'un monobloc multifonctions (60) de telle sorte que le dispositif de management thermique comprend un mode de fonctionnement selon lequel les calories de l'air traversant le radiateur (31) de la boucle chaude (L3) peuvent être transférées à l'échangeur (14) de la boucle de fluide réfrigérant (L1) afin de réchauffer l'air à destination de l'habitacle (47a).

2. Dispositif selon la revendication précédente, **caractérisé en ce qu'**il comprend un unique radiateur de refroidisseur (31), la boucle chaude (L3) comprenant l'unique radiateur de refroidissement (31) qui est destiné au transfert thermique entre l'air ambiant et le fluide traversant le radiateur, notamment dans un mode de fonctionnement de type pompe à chaleur du dispositif de management thermique (1).

3. Dispositif selon la revendication précédente, **caractérisé en ce qu'**il comprend des branches d'interconnexion (93b, 95b), notamment une première branche d'interconnexion (93b) et une seconde branche d'interconnexion (95b), destinées à connecter en tout ou partie les boucles froide (L2), chaude (L3) et de régulation thermique (L4), ainsi que des vannes de régulation (42, 34, 98) destinées à mettre en relation thermique la boucle de régulation thermique (L4) de la batterie (47a) avec la boucle chaude (L3) et/ou la boucle froide (L2), de telle sorte que les calories de l'air ambiant prélevées par l'unique radiateur (31) peuvent être transférées vers la boucle de régulation thermique (L4) et/ou la boucle froide (L2) dans un mode de fonctionnement de type pompe à chaleur du dispositif.

4. Dispositif selon la revendication précédente, **caractérisé en ce que** chacune des première et seconde branches d'interconnexion (93b, 95b) est directement reliée à au moins une vanne de régulation (34, 98) du monobloc multifonctions (60), chacune des vannes de régulation étant apte à être reliée directement au radiateur (31).

5. Dispositif selon la revendication précédente, **caractérisé en ce que** l'une des extrémités de ladite autre branche d'interconnexion (95b) est reliée à un point de piquage (P1) interne audit monobloc multifonctions (60) situé directement en amont d'une première pompe (20) destinée à la circulation du fluide caloporteur au travers de la boucle froide (L2), la pompe étant comprise dans le monobloc multifonctions (60).

6. Dispositif selon la revendication précédente, **caractérisé en ce que** le monobloc multifonctions (60) comprend un vase d'expansion (33) destiné au dégazage et à la compensation de la variation du volume de liquide caloporteur liée à la variation de sa température lorsque ce dernier circule au travers de la boucle chaude (L3) et/ou de la boucle froide (L2).

7. Dispositif selon l'une quelconque des revendications précédentes, **caractérisé en ce que** la boucle de fluide réfrigérant (L1) comprend un compresseur (10), le condenseur (11), une vanne de détente (13), l'évaporateur (14) pris dans cet ordre lors de la mise en fonctionnement du compresseur (10).

8. Dispositif selon la revendication précédente, **caractérisé en ce qu'**il comprend un moyen de contrôle de la circulation du fluide caloporteur circulant de la boucle froide (L2) vers la boucle de régulation thermique (L4) de la batterie (47a), ledit moyen de contrôle de la circulation étant notamment une première vanne multivoies (42) comprise dans le monobloc multifonctions (60).

9. Dispositif selon la revendication précédente en combinaison avec la revendication 4, **caractérisé en ce que** la première vanne multivoies (42) comprend au moins une ouverture de sortie (44a) destinée à l'écoulement du fluide caloporteur au travers d'une branche de connexion (44) et de la première branche d'interconnexion (93b), la branche de connexion (44) étant reliée fluidiquement à un échangeur (47) destiné à une relation thermique avec la boucle de régulation thermique (L4) de la batterie (47a), la première vanne de régulation (42) comprenant au moins une interface d'entrée (61a, 62a) reliée respectivement à la sortie d'un refroidisseur (21) d'air destiné à l'habitacle et/ou une branche de contournement (25) du refroidisseur (21), le refroidisseur (21) et la branche de contournement (25) étant compris dans la boucle froide (L2).

10. Dispositif selon la revendication précédente, **caractérisé en ce que** la boucle froide (L2) comprend l'évaporateur (14) de la boucle de fluide réfrigérant (L1), le refroidisseur (21) d'air et/ou la branche de contournement (25) et la première pompe (20), pris dans cet ordre durant l'écoulement du fluide caloporteur dans le boucle froide (L2) par la première pompe (20).

11. Procédé de fonctionnement du dispositif de management thermique (1) selon l'une quelconque des revendications précédentes, **caractérisé en ce que** ledit moyen de contrôle (50) pilote :
- la première vanne multivoies (42) de manière à mettre en relation fluidique la branche de contournement (25) du refroidisseur (21) avec la branche de connexion (44), et
- la vanne de régulation (99) en l'état fermé de telle sorte que le fluide caloporteur n'est pas apte à traverser l'échangeur (47), et
- la seconde vanne multivoies (34) de manière à mettre en relation fluidique la première branche d'interconnexion (93b) avec le radiateur (31), et
- la troisième vanne multivoies (98) de manière à mettre en relation fluidique le radiateur (31) avec la seconde branche d'interconnexion (95b) reliée au point de piquage (P1) situé en amont d'une première pompe (20), et
- la première pompe (20) de manière à faire circuler le fluide caloporteur au travers de la boucle froide (L2).

12. Procédé de fonctionnement selon la revendication précédente, **caractérisé en ce que** le moyen de contrôle (50) pilote :
- la seconde vanne (34) de manière à mettre en relation fluidique le condenseur (11) et la chaîne de traction électrique (32) avec l'aérotherme (91), et
- la troisième vanne (98) de manière à mettre en relation fluidique l'aérotherme (91) avec la seconde pompe (30), et
- la seconde pompe (30) de manière à faire circuler le fluide caloporteur au travers de la boucle chaude (L3).

13. Procédé de fonctionnement selon la revendication précédente, **caractérisé en ce que** le moyen de contrôle (50) pilote :
- la troisième vanne multivoies (98) de manière à mettre en relation fluidique la boucle chaude (L3) avec la seconde branche d'interconnexion (95b) comprenant l'unique vase d'expansion (33).

14. Véhicule, notamment de type à propulsion électrique, **caractérisé en ce qu'**il comprend le dispositif de management thermique (1) selon l'une quelconque des revendications 1 à 10, ou **en ce qu'**il comprend les moyens matériel et logiciel permettant la mise en œuvre du procédé de fonctionnement du dispositif de management thermique (1) selon les revendications 11 à 13.
